# EUROPEAN PATENT SPECIFICATION

(11) **EP 2 946 086 B1**
(45) Date of publication and mention of the grant of the patent: **21.06.2017**
(21) Application number: 13704554.8
(22) Date of filing: 16.01.2013
(51) Int. Cl.: F02B 43/00, F02D 19/06, F02D 19/08

(54) **HYDROGEN FLUSHED COMBUSTION CHAMBER**
WASSERSTOFFGESPÜLTENBRENNKAMMER
CHAMBRE DE COMBUSTION LAVÉE AVEC HYDROGÈNE

(43) Date of publication of application: 25.11.2015
(73) Proprietor: Caterpillar Energy Solutions GmbH, 68167 Mannheim (DE)
(72) Inventor: SCHILIRÒ, Michele, 1740 Ferpicloz (CH)
(74) Representative: BRP Renaud & Partner mbB Rechtsanwälte Patentanwälte Steuerberater
(86) International application number: PCT/EP2013/050756
(87) International publication number: WO 2014/111143

(56) References cited:
- WO-A1-93/08385
- WO-A1-2004/101980
- US-A- 5 178 118

## Description

The present invention relates to a procedure for running a spark-ignited gas engine with a combustion chamber and with a hydrogen source, said source supplying the engine with hydrogen, whereby the combustion chamber is being loaded with a gas air mixture.

EP 0 770 171 B1 discloses ignition devices for internal combustion engines, and more particularly hydrogen assisted jet ignition (HAJI) devices for improving combustion efficiency. In the present specification the term "hydrogen" is intended to include hydrogen and other fast-burning fuels. The benefits from the lean combustion approach are theoretically explained as follows. The excess air improves the engine's thermal efficiency by increasing the overall specific heats' ratio, by decreasing the energy losses from dissociation of the combustion products, and by reducing the thermal losses to the engine cooling system. In addition, as the flame temperature drops with decreasing fuel air ratio, the NOx production is exponentially reduced and the excess air may promote a more complete reaction of CO and hydrocarbon fuel emission from crevices and quench layers. It further discloses that the effect of changing the main chamber fuel composition for the range of 1 = 1 to 3.5 at full throttle (full power) and smaller ranges at part throttle was studied and that even at full throttle it was possible to reduce the work per cycle wc (and the torque) to no load quantities by increasing the relative air/fuel ratio; whereas the lean limit for this engine with normal ignition is shown to occur at l = 1.64, there exists no lean limit with hydrogen assisted jet ignition, HAJI, within the usable range of wc.

EP 0 770 171 B1 discloses that many attempts have been made to improve combustion efficiency. Such attempts included fuel stratification with a rich mixture in the spark plug region, divided or prechamber engines alone or in combination with stratification, and hydrogen enrichment of the whole fuel charge. None of these attempts have been entirely successful and the problems referred to above remain in evidence.

Further, documents US 5 178 118 A and WO 93/08385 A1 disclose gas engines with hydrogen assisted ignition.

The object of the invention is to configure and arrange a combustion procedure for an Otto gas engine in such a manner that a higher rate of combustion is achievable. According to the invention, the aforesaid object is achieved in that a) the loaded gas air mixture is choked with hydrogen, i. e. the hydrogen is added to the air gas mixture or b) the combustion chamber is directly charged with hydrogen, in an amount of at most X % of the volume of the loaded gas as a proportion of the gas air mixture in dependency of a value lambda λ according to the following table, whereby this loaded mixture of hydrogen, air and gas is adjusted to a maximum value lambda λ of Y, according to the following table:

| | | | | | | |
|---|---|---|---|---|---|---|
| X [%] | 3.0 | 8.0 | 13.0 | 33.0 | 50.0 | 80.0 |
| Y | 1.8 - 2.1 | 1.85 - 2.3 | 1.9 - 2.4 | 2.2 - 2.8 | 2.5 - 3.5 | 3.7 - 5.1 |

The maximum value lambda λ is defined as a range between the two values mentioned in the second line of this table. For example, in case of an amount of at most 3 % hydrogen of the volume of the loaded gas the maximum value lambda λ is between 1.8 and 2.1.

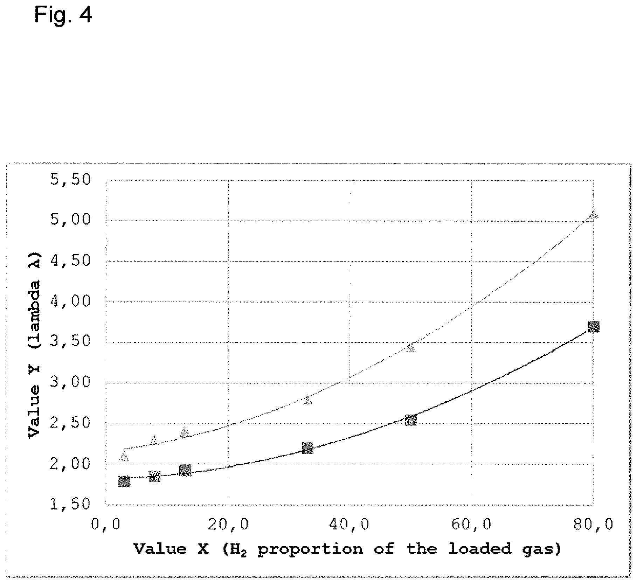

Further values for other amounts of hydrogen except the six values mentioned in the table above can be derived from the chart in figure 4. In this case, the additional gas proportion except hydrogen is methane. The combustion speed is adopted to be laminar with 15 cm/s.

The Δ-graph is the top of the range for value Y and the □-graph is the bottom of the range for value Y, both in dependency of value X.

To allocate a highly lean mixture leads to a combustion having a lower NOx (nitrogen oxide) portion and an increased rate of combustion. The increased rate of combustion allows a delayed ignition point, which leads to a higher degree of efficiency.

In case of for example 3 % hydrogen the value lambda λ should be 2.01 or less, i. e. the loaded mixture of hydrogen, air and gas can always be richer than the mentioned value Y (2.01), because a richer mixture is basically better ignitable than a leaner mixture. If the proportion of hydrogen is less than 3 %, the mixture should be richer than said value Y (2.01) to allow a good ignition, i. e. a high rate of combustion.

The mentioned values X and Y are six examples for the one skilled in the art as a basis for the adjustment of the values X and Y in a manner that the loaded mixture of hydrogen, air and gas is as lean as possible.

Even a higher proportion of hydrogen in the amount of 100 % is marketable, though other sources for hydrogen as claimed are necessary. In this case, the value lambda λ should be at most 9.8. As mentioned before, in case of less than 100 % hydrogen, the mixture has to be a little richer than Y = 9.8. In case of 80 % hydrogen it has to be no leaner than 8.60.

For all values mentioned before a deviation of +/- 15 % is possible, because of the further circumstances and conditions of the combustion.

The hydrogen increases the rate of combustion and thus the efficiency of the engine. Additionally to this the very lean gas-air mixture in the combustion chamber having a value lambda λ above 1.81 leads to a combustion with a lower NOx (nitrogen oxide) portion. The increased rate of combustion allows a later point of ignition, which leads to a higher degree of efficiency. Further efficiency asset results in part from the methane for the oxidation reaction R3, R3', because there is energy recharged with hydrogen, produced by using exhaust gas energy.

The efficiency of the H₂ production by a chemical reaction is not subject to restrictions like a thermo dynamic cyclic process. Therefore, the thermal exhaust energy used in this chemical process is reformed with a much better degree of efficiency, which leads to a better degree of efficiency overall.

Moreover, recharging this produced hydrogen leads to a reduction of nitrogen oxide (NOx) and formaldehyde, i. e. methanal (CH₂O) emissions, because the added hydrogen has a catalytic effect on the combustion. For this, the efficiency of the engine is increased, too.

It can also be an advantage if the engine generating an exhaust gas stream is having a thermal reformer as source, said thermal reformer converting water into hydrogen according to the following reactions:

R1: MO_{red} + H₂O <<->> MOₒₓ + H₂,

R2: MOₒₓ <<->> MO_{red} + O₂,

and that the reformer is supplied with water and with heat from at least a part of the exhaust gas stream and that there are additional heating means, said heating means being powered by a part of the gas the engine is powered with in order to achieve the following exothermic oxidation reaction:

R3: CH₄ + O₂ <<->> 2H₂O + CO₂,

or

R3': CₙHₘ + _{(n/2)}O₂ <<->> _{(m/2)}H₂ + ₙCO,

whereby the heating means are thermodynamically coupled to the reformer and are additionally heating the reformer.

Another procedure is possible, in which the engine generating an exhaust gas stream is having a converter, said converter converting higher HCs of the available gas to hydrogen, said HCs consisting of n carbon atoms and m hydrogen atoms according to at least one of the following reactions:

- CₙHₘ + ₙH₂O <<->> _{(m/2 +n)}H₂ + ₙCO,

- CₙHₘ + _{(n/2)}O₂ <<->> _{(m/2)}H₂ + ₙCO,

- CₙHₘ + ₙCO₂ <<->> _{(m/2)}H₂ + ₂ₙCO,

whereby the converter is supplied with water, gas and with heat from at least a part of the exhaust gas stream.

Alternatively, it can be advantageous if having a thermal reformer and additionally a converter is being used to generate hydrogen.

Additionally, it can be advantageous if at least one compressor for loading said air-gas-mixture is driven via a motor, for example electrically. For this, the connected exhaust gas turbine can be eliminated. Therefore, the exhaust gas has a temperature that is 100°C to 150°C higher when entering the reformer. This higher temperature serves an improved operation of the reformer or the respective reactor in such that the heating means can generate less heating output.

It can be advantageous if the engine has an exhaust gas turbine and at least one further generator for generating power, said further generator being driven mechanically via the exhaust gas turbine, said exhaust gas turbine being positioned downstream to the source. The energy available from the exhaust gas can be gained in this stage and used to generate energy for heating or powering processes.

Additionally, it can be advantageous if only higher HCs, which have at least two or three carbon atoms, are converted in the converter. For optimization the methane number of the available gas it is more efficient to convert higher HC's first, i. e. methane itself must not be converted and therefore be joked with hydrogen.

Other advantages and details of the invention are explained in the claims and in the description as well as shown in the figures, in which:
- Figure 1: shows a schematic diagram of a supply chain of an engine generator unit with a H₂ reformer;
- Figure 2: shows a schematic diagram similar to figure 1 with an electrically driven compressor;
- Figure 3: shows a schematic diagram of a supply chain of an engine generator unit with a gas converter.

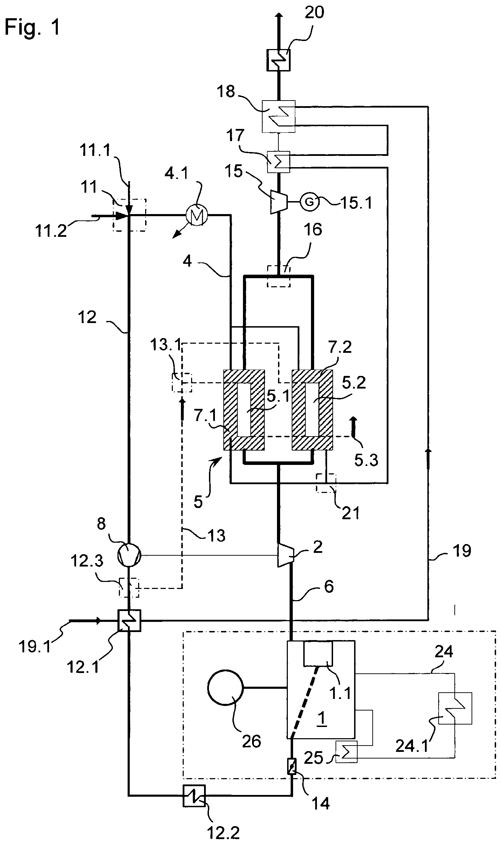

The schematic diagram in Figure 1 shows the supply chain of a spark-ignited gas engine 1 with an air-gas mixture.

Starting from a gas mixer 11 at which the ambient air is mixed with the main combustion gas via an air port 11.1 and a gas port 11.2, a fuel duct 12 is conducted via a compressor 8 and a fuel cooler 12.2 to the gas engine 1 or to a combustion chamber 1.1 of the gas engine 1. A throttle valve 14 that is controlled based on the output of the gas engine 1 is provided in this fuel duct 12 immediately upstream to the gas engine 1. The gas engine 1 is connected to a generator 26, for example as part of a genset.

The gas engine 1 comprises an exhaust gas duct 6 in which an exhaust gas turbine 2 is provided downstream to the gas engine 1 that is used to drive the above-mentioned compressor 8. After passing through the exhaust gas turbine 2, the exhaust gas is conducted through a reformer 5 where it dissipates heat to the reformer 5 or a first reactor 5.1 or a second reactor 5.2, respectively. The exhaust gas passes the reformer 5, in parallel, via two separate exhaust gas streams that are coupled or controlled, respectively, via a valve 16 for exhaust gas, and associated with the respective reactor 5.1, 5.2. The valve 16 for exhaust gas is followed by a heat exchanger or superheater 17, respectively, and a downstream evaporator 18 for a water circuit 19 described below. An exhaust gas heat exchanger 20 is provided downstream before the exhaust gas is carried off to the exhaust system not shown here.

The water circuit or water duct 19 with the water port 19.1 is provided for supplying the reformer 5 with water for producing hydrogen. First, the water carried in it is preheated by a heat exchanger 12.1 for water coupled to the fuel duct 12, wherein the heat is taken from the compressed exhaust gas-air mixture. Then the water is heated in the evaporator 18 mentioned above, and the vapor is overheated accordingly in the downstream superheater 17 before it is returned to one of the two reactors 5.1, 5.2 of the reformer 5 via a respective valve 21 for water, i.e. steam. The hydrogen that is produced during reformation is fed to the mixer 11 via a hydrogen duct 4 and a condenser 4.1. The oxygen generated during hydrogen generation is carried off into the environment via a waste gate 5.3.

In order to achieve the temperatures required in the respective reactor 5.1, 5.2 or in the reformer 5, respectively, the respective reactor 5.1, 5.2 additionally comprises heating means 7.1, 7.2 that are also supplied with the air-gas mixture fed to the gas engine 1. For this purpose, the fuel duct 12 comprises a fuel valve 12.3 via which the required air-gas mixture is supplied via a fuel duct 13 and an air-gas valve 13.1 to the respective reactor 5.1, 5.2 or the respective heating means 7.1, 7.2. The CO₂ exhaust gas that is produced when operating the respective heating means 7.1, 7.2 is carried off via the waste gate 5.3.

In addition, the gas engine 1 comprises a cooling circuit 24 with a cooling water heat exchanger 24.1 for cooling the gas engine 1. The cooling circuit 24 is also connected to an oil cooling exchanger 25.

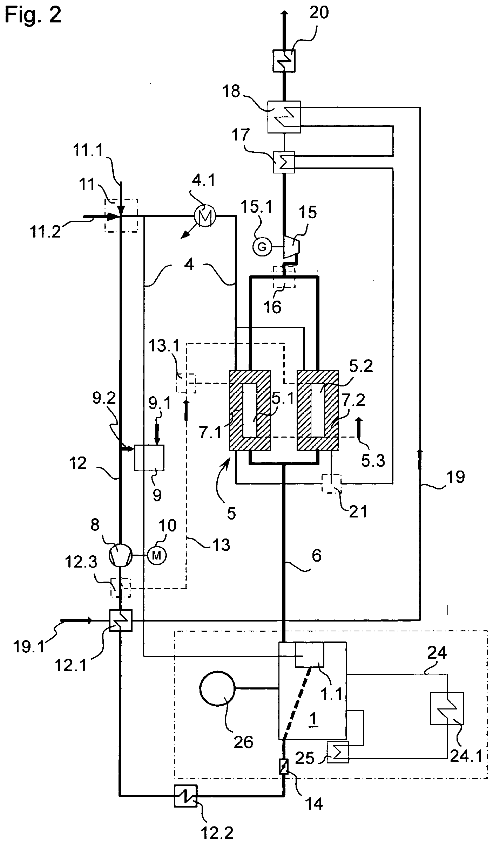

According to the functional diagram shown in Figure 2, the compressor 8 is driven by an electric motor 10. The connected exhaust gas turbine 2 as shown in Figure 1 is eliminated. For this, the exhaust gas, when it enters the reformer 5, has a temperature that is 100°C to 150°C higher. This higher temperature serves improved operation of the reformer 5 or the respective reactor 5.1, 5.2 in such that the heating means 7.1, 7.2 have to generate less heating output.

Alternatively, there is an exhaust gas turbine 15 positioned downstream to the reformer 5 with a connected generator 15.1 for generating power. This power can be used for further heating means connected to the reformer 5 or the superheater 17 or the evaporator 18, for example.

In addition, there is a mixing section 9 within the hydrogen duct 4 in which ambient air or gas is admixed to the hydrogen via an air port 9.1 and a gas-port 9.2 to obtain a hydrogen-gas or a hydrogen-gas-air mixture the combustion chamber 1.1 is loaded with.

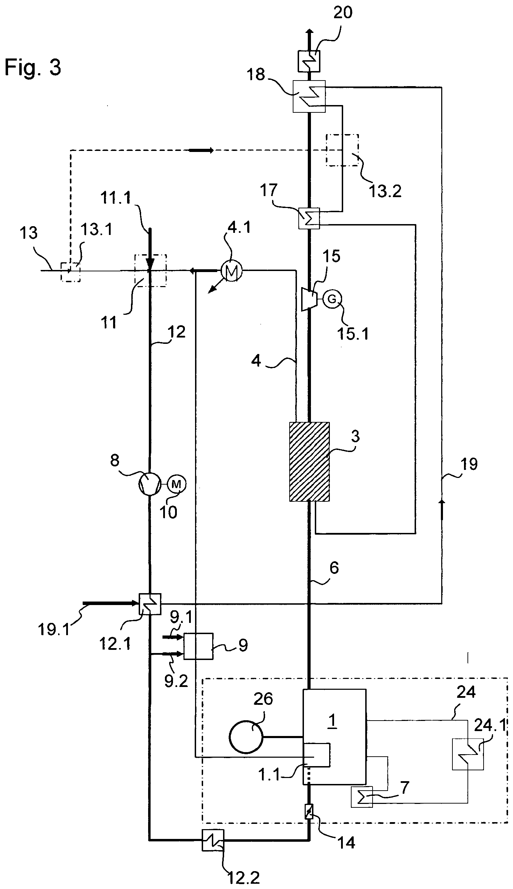

The schematic diagram in Figure 3 shows the supply chain of a spark-ignited gas engine 1 with a gas converter.

Starting from the gas mixer 11 at which the ambient air is added via the air port 11.1 and mixed with the combustion gas, provided via the gas duct 13, the fuel duct 12 is conducted via the compressor 8 and the fuel cooler 12.2 to the spark-ignited gas engine 1 or to a combustion chamber 1.1 of the spark-ignited gas engine 1. The throttle valve 14 that is controlled based on the output of the spark-ignited gas engine 1 is provided in this fuel duct 12 immediately upstream of the spark-ignited gas engine 1.

The compressor 8 is driven by an electric motor 10. Therefore, there is no need for a connected exhaust gas turbine. The exhaust gas, when it enters a reformer 3 described below, has a temperature that is 100°C to 150°C higher as in case of an exhaust gas turbine. This higher temperature contributes to the enhanced operation of the reformer 3.

The spark-ignited gas engine 1 comprises the exhaust gas duct 6, in which the reformer 3 for gas is provided downstream to the spark-ignited gas engine 1. The heat of the exhaust gas is in part dissipated to the reformer 3 via a heat exchanger not shown here.

Downstream to the reformer 3, the exhaust gas turbine 15 is provided with a generator 15.1 coupled to it. Further expansion of the exhaust gas generates electricity that can also be used for the motor 10.

The exhaust gas turbine 15 is followed by the heat exchanger or superheater 17 and the evaporator 18 for a water circuit 19 described below. The exhaust gas heat exchanger 20 is provided downstream before the exhaust gas is carried off to the exhaust system not shown here.

The water circuit or water duct 19 with the water port 19.1 is provided for supplying the reformer 3 with water vapor for producing reform gas. First, the water carried in it is preheated by the water heat exchanger 12.1 coupled to the fuel duct 12, wherein the heat is taken from the compressed exhaust gas-air mixture. Then the water is heated in the evaporator 18 mentioned above, and the vapor is overheated accordingly in the downstream superheater 17 before it is discharged into the reformer 3.

A gas-steam mixing point 13.2 for adding combustion gas to the water vapor is provided between the evaporator 18 and the superheater 19. The mixing point 13.2 is connected to a gas duct 13 via the gas valve 13.1 for gas.

The reform gas that is produced during reformation can be fed to the mixer 11, and thus to the air-gas mixture, for combustion in the spark-ignited gas engine 1 via a reform gas duct 4 and a condenser 4.1.

There is a mixing section 9 within the reform gas duct 4 with a air port 9.1 and a gas port 9.2 which allows mixing combustion gas and/or air to the reform gas before this mixture is injected into the combustion chamber 1.1.

### Reference list

- 1: gas engine
- 1.1: combustion chamber
- 2: exhaust gas turbine
- 3: hydrogen source, converter
- 4: hydrogen duct
- 4.1: condenser
- 5: hydrogen source, thermal reformer
- 5.1: reactor
- 5.2: reactor
- 5.3: waste gate of reformer
- 6: exhaust gas duct, exhaust gas stream
- 7.1: heating means
- 7.2: heating means
- 8: compressor
- 9: mixing section
- 9.1: air port
- 9.2: gas port
- 10: electric motor, motor
- 11: gas mixer
- 11.1: air port
- 11.2: gas port
- 12: fuel duct
- 12.1: heat exchanger
- 12.2: fuel cooler
- 12.3: fuel valve
- 13: fuel duct
- 13.1: fuel valve
- 13.2: mixing point
- 14: throttle valve
- 15: further exhaust gas turbine
- 15.1: further generator
- 16: valve for exhaust gas
- 17: superheater
- 18: evaporator
- 19: water circuit, water duct
- 19.1: water port
- 20: exhaust gas heat exchanger
- 21: valve for water
- 24: cooling system / circuit
- 24.1: cooling water heat exchanger
- 25: oil cooling exchanger
- 26: generator

- λ: ratio air_{actual}/air_{stoichiometric}
- X: amount of hydrogen
- Y: maximum λ

## Claims

1. Procedure for running a spark-ignited gas engine (1) with a combustion chamber (1.1) and with a hydrogen source (5, 3), said source (5, 3) supplying the engine (1) with hydrogen, whereby the combustion chamber (1.1) is loaded with a gas air mixture, **characterized in that**
a) the loaded gas air mixture is choked with hydrogen or
b) the combustion chamber (1.1) is directly charged with hydrogen,
in an amount of at most X % of the volume of the loaded gas, whereby this loaded mixture of hydrogen, air and gas is adjusted to a maximum value lambda λ of Y, according to the following table, wherein lambda is the ratio air_{actual}/air_{stoichiometric}:
| | | | | | | |
|---|---|---|---|---|---|---|
| X [%] | 3.0 | 8.0 | 13.0 | 33.0 | 50.0 | 80.0 |
| Y | 1.8 - 2.1 | 1.85 - 2.3 | 1.9 - 2.4 | 2.2 - 2.8 | 2.5 - 3.5 | 3.7 - 5.1 |

2. Procedure according to claim 1, in which the engine (1) generating an exhaust gas stream (6) is having a thermal reformer (5) as source, said thermal reformer (5) converting water into hydrogen according to the following reactions:
R1: MO_{red} + H₂O <<->> MOₒₓ + H₂,
R2: MOₒₓ <<->> MO_{red} + O₂,
and said reformer (5) is supplied with water and with heat from at least a part of the exhaust gas stream (6) and that there are additional heating means (7.1, 7.2), said heating means (7.1, 7.2) being powered by a part of the gas the engine (1) is powered with in order to achieve the following exothermic oxidation reaction:
R3: CH₄ + O₂ <<->> 2H₂O + CO₂,
or
R3': CₙHₘ + _{(n/2)}O₂ <<->> _{(m/2)}H₂ + ₙCO,
whereby the heating means (7.1, 7.2) are thermodynamically coupled to the reformer (5) and are additionally heating the reformer (5).

3. Procedure according to claim 1, in which the engine (1) generating an exhaust gas stream (6) is having a converter (3), said converter (3) converting higher HCs to hydrogen, said HCs consisting of n carbon atoms and m hydrogen atoms according to at least one of the following reactions:
- CₙHₘ + ₙH₂O <<->> _{(m/2 +n)}H₂ + ₙCO,
- CₙHₘ + _{(n/2)}O₂ <<->> _{(m/2)}H₂ + ₙCO,
- CₙHₘ + ₙCO₂ <<->> _{(m/2)}H₂ + ₂ₙCO,
whereby the converter (3) is supplied with water, gas and with heat from at least a part of the exhaust gas stream (6).

4. Procedure according to claim 1, in which at least one compressor (8) for loading said air-gas-mixture is driven via a motor (10).

5. Procedure according to claim 5, in which the compressor (8) is driven electrically.

6. Procedure according to claim 1, in which the engine (1) has an exhaust gas turbine (15) and at least one further generator (15.1) for generating power, said further generator (15.1) is being driven mechanically via the exhaust gas turbine (15), said exhaust gas turbine (15) being positioned downstream to the source (3, 5).

7. Procedure according to claim 3, in which only higher HCs, which have at least two or three carbon atoms, are converted.

## Patentansprüche

1. Verfahren zum Betreiben eines funkengezündeten Gasmotors (1) mit einer Brennkammer (1.1) und mit einer Wasserstoffquelle (5, 3), wobei die Quelle (5, 3) den Motor (1) mit Wasserstoff versorgt, wobei die Brennkammer (1.1) mit einem Gas-Luft-Gemisch beladen wird,
**dadurch gekennzeichnet, dass**
a) das beladene Gas-Luftgemisch mit Wasserstoff erstickt wird oder
b) die Brennkammer (1.1) direkt mit Wasserstoff geladen wird,
in einer Menge von höchstens X % des Volumens des beladenen Gases, wobei diese beladene Mischung von Wasserstoff, Luft und Gas eingestellt wird auf einen maximalen Wert Lambda λ von Y, gemäß der folgenden Tabelle, wobei Lambda das Verhältnis Luft_{tatsächlich}/Luft_{stöchiometrisch} ist:
| | | | | | | |
|---|---|---|---|---|---|---|
| X [%] | 3.0 | 8.0 | 13.0 | 33.0 | 50.0 | 80.0 |
| Y | 1.8 - 2.1 | 1.85 - 2.3 | 1.9 - 2.4 | 2.2 - 2.8 | 2.5 - 3.5 | 3.7 - 5.1 |

2. Verfahren nach Anspruch 1, bei dem der Motor (1), der einen Abgasstrom (6) erzeugt, einen thermischen Reformer (5) als Quelle aufweist, wobei der thermische Reformer (5) Wasser in Wasserstoff umwandelt, gemäß den folgenden Reaktionen:
R1: MO_{red} + H₂O <<->> MOₒₓ + H₂,
R2: MOₒₓ <<->> MO_{red} + O₂,
und bei dem der Reformer (5) mit Wasser und mit Wärme aus mindestens einem Teil des Abgasstroms (6) versorgt wird und bei dem zusätzliche Heizmittel (7.1, 7.2) vorhanden sind, wobei die Heizmittel (7.1, 7.2) mit einem Teil des Gases angetrieben werden, mit dem der Motor (1) angetrieben wird, um die folgende exotherme Oxidationsreaktion zu erreichen:
R3: CH₄ + O₂ <<->> 2H₂O + CO₂,
oder
R3': CₙHₘ + _{(n/2)}O₂ <<->> _{(m/2)}H₂ + ₙCO,
wobei die Heizmittel (7.1, 7.2) thermodynamisch mit dem Reformer (5) gekoppelt sind und zusätzlich den Reformer (5) erwärmen.

3. Verfahren nach Anspruch 1, bei dem der Motor (1), der einen Abgasstrom (6) erzeugt, einen Wandler (3) aufweist, wobei der Wandler (3) höhere HCs in Wasserstoff umwandelt, wobei die HCs aus n Kohlenstoffatomen und m Wasserstoffatomen bestehen, nach mindestens einer der folgenden Reaktionen:
- CₙHₘ + ₙH₂O <<->> _{(m/2 +n)}H₂ + ₙCO,
- CₙHₘ + _{(n/2)}O₂ <<->> _{(m/2)}H₂ + ₙCO,
- CₙHₘ + ₙCO₂ <<->> _{(m/2)}H₂ + ₂ₙCO,
wobei der Wandler (3) mit Wasser, Gas und mit Wärme aus mindestens einem Teil des Abgasstroms (6) versorgt wird.

4. Verfahren nach Anspruch 1, bei dem mindestens ein Kompressor (8) zum Beladen des Luft-Gas-Gemisches über einen Motor (10) angetrieben wird.

5. Verfahren nach Anspruch 5, bei dem der Kompressor (8) elektrisch angetrieben wird.

6. Verfahren nach Anspruch 1, bei dem der Motor (1) eine Abgasturbine (15) und mindestens einen weiteren Generator (15.1) zur Erzeugung von Leistung aufweist, wobei der weitere Generator (15.1) mechanisch über die Abgasturbine (15) angetrieben wird, wobei die Abgasturbine (15) stromabwärts zur Quelle (3, 5) angeordnet ist.

7. Verfahren nach Anspruch 3, bei dem nur höhere HCs, die mindestens zwei oder drei Kohlenstoffatome aufweisen, umgewandelt werden.

## Revendications

1. Procédure pour faire fonctionner un moteur à gaz à allumage par étincelles (1) ayant une chambre de combustion (1.1) et une source d'hydrogène (5, 3), ladite source (5, 3) approvisionnant le moteur (1) avec de l'hydrogène, de sorte que la chambre de combustion (1.1) est chargée avec un mélange gaz-air, **caractérisée en ce que**
a) le mélange chargé gaz-air est étouffé avec de l'hydrogène ou
b) la chambre de combustion (1.1) est directement chargée avec de l'hydrogène,
en une quantité d'au plus X % du volume du gaz chargé, de sorte que ce mélange chargé d'hydrogène, d'air et de gaz est ajusté à une valeur maximale de lambda λ de Y, selon le tableau suivant, dans lequel lambda est le rapport air_{réel}/air_{stoechiométrique} :
| | | | | | | |
|---|---|---|---|---|---|---|
| X [%] | 3,0 | 8,0 | 13,0 | 33,0 | 50,0 | 80,0 |
| Y | 1,8 à 2,1 | 1,85 à 2,3 | 1,9 à 2,4 | 2,2 à 2,8 | 2,5 à 3,5 | 3,7 à 5,1 |

2. Procédure selon la revendication 1, dans lequel le moteur (1) produisant un flot de gaz d'échappement (6) possède un dispositif de reformage thermique (5) en tant que source, ledit dispositif de reformage thermique (5) transformant l'eau en hydrogène selon les réactions suivantes :
R1 : MO_{red} + H₂O <<->> MOₒₓ + H₂,
R2 : MOₒₓ <<->> MO_{red} + O₂,
et ledit dispositif de reformage (5) est alimenté en eau et en chaleur à partir d'au moins une partie du flot de gaz d'échappement (6) et qu'il y a un moyen de chauffage supplémentaire (7.1, 7.2), ledit moyen de chauffage (7.1, 7.2) étant alimenté par une partie du gaz avec lequel le moteur (1) est alimenté pour parvenir à la réaction d'oxydation exothermique suivante :
R3 : CH₄ + O₂ <<->> 2H₂O + CO₂,
ou
R3' : CₙHₘ + _{(n/2)}O₂ <<->> _{(m/2)}H₂ + ₙCO,
de sorte que le moyen de chauffage (7.1, 7.2) est couplé de façon thermodynamique au dispositif de reformage (5) et chauffe de plus le dispositif de reformage (5).

3. Procédure selon la revendication 1, dans lequel le moteur (1) produisant un flot de gaz d'échappement (6) possède un convertisseur (3), ledit convertisseur (3) transformant des HC supérieurs en hydrogène, lesdits HC consistant en n atomes de carbone et m atomes d'hydrogène selon au moins une des réactions suivantes :
- CₙHₘ + ₙH₂O <<->> _{(m/2+n)}H₂ + ₙCO,
- CₙHₘ + _{(n/2)}O₂ <<->> _{(m/2)}H₂ + ₙCO,
- CₙHₘ + ₙCO₂ <<->> _{(m/2)}H₂ + ₂ₙCO,
de sorte que le convertisseur (3) est alimenté en eau, en gaz et en chaleur en provenance d'au moins une partie du flot de gaz d'échappement (6).

4. Procédure selon la revendication 1, dans laquelle au moins un compresseur (8) pour charger ledit mélange gaz-air est entraîné par un moteur (10).

5. Procédure selon la revendication 5, dans laquelle le compresseur (8) est entraîné électriquement.

6. Procédure selon la revendication 1, dans laquelle le moteur (1) possède une turbine de gaz d'échappement (15) et au moins un générateur supplémentaire (15.1) pour produire de l'énergie, ledit générateur supplémentaire (15.1) est entraîné mécaniquement par l'intermédiaire de la turbine à gaz d'échappement (15), ladite turbine à gaz d'échappement (15) étant positionnée en aval de la source (3, 5).

7. Procédure selon la revendication 3, dans lequel seulement des HC supérieurs, qui ont au moins deux ou trois atomes de carbone, sont transformés.
